**Europäisches Patentamt**

**European Patent Office**

**Office européen des brevets**

(19)

(11) Veröffentlichungsnummer: **0 204 707**
**B1**

(12) **EUROPÄISCHE PATENTSCHRIFT**

(45) Veröffentlichungstag der Patentschrift: 29.08.90

(21) Anmeldenummer: 85903243.5

(22) Anmeldetag: 13.06.85

(86) Internationale Anmeldenummer:
PCT/EP85/00282

(87) Internationale Veröffentlichungsnummer:
WO 86/03556 19.06.86 Gazette 86/13

(51) Int. Cl.⁵: **F 02 B 47/02, F 02 D 19/12,**
**F 02 M 25/02, F 02 B 43/10**

(54) Verfahren zum Betreiben einer Brennkraftmaschine und Brennkraftmaschine.

(30) Priorität: 05.12.84 IT 662884
14.12.84 IT 663284
08.02.85 IT 660485

(43) Veröffentlichungstag der Anmeldung:
17.12.86 Patentblatt 86/51

(45) Bekanntmachung des Hinweises auf die
Patenterteilung:
29.08.90 Patentblatt 90/35

(84) Benannte Vertragsstaaten:
AT CH DE FR GB IT LI NL SE

(56) Entgegenhaltungen:
DE-A-2 404 829
DE-A-2 645 237
FR-A- 883 995
GB-A-2 006 873
GB-A-2 093 121
GB-A-2 107 390
US-A-3 980 055
US-A-4 448 153

(73) Patentinhaber: MURABITO, Luigi
Viale Dallai 2
I-4102 Carpi (IT)

(72) Erfinder: RISITANO, Antonino
V.le Andrea Doria 6
I-95125 Catania (IT)
Erfinder: ROSARIO, Lanzafame
Via Vaccarini, 11
I-95030 S. Agata Li Battiati (IT)

(74) Vertreter: Popp, Eugen, Dr. et al
MEISSNER, BOLTE & PARTNER
Widenmayerstrasse 48 Postfach 86 06 24
D-8000 München 86 (DE)

Courier Press, Leamington Spa, England.

# EP 0 204 707 B1

**Beschreibung**

Die Erfindung betrifft ein Verfahren zum Betreiben einer Brennkraftmaschine, insbesondere eines Hub- oder Drehkolbenmotors, und eine Brennkraftmaschine, die zur Durchführung dieses Verfahrens geeignet ist gemäß dem Oberbegriff des Anspruches 1 bzw. 9.

Herkömmliche Brennkraftmaschinen, insbesondre Hubkolbenmotoren mit Fremdzündung, wie sie in Kraftfahrzeugen und stationären Anlagen Verwendung finden, haben einen maximalen thermischen Wirkungsgrad von etwa 30%; das Verhältnis des Energiewertes des Kraftstoffes, der dem Verbrennungsraum zugeführt wird, verglichen mit der Energie, die letztlich verfügbar ist, beträgt also etwa nur 30%. Einen ähnlich geringen Wirkungsgrad weisen auch Turbinen, Kreiskolbenmaschinen oder dergleichen auf.

Es ist allgemein bekannt, den Wirkungsgrad von Brennkraftmaschinen der genannten Art durch Einleitung von Wasser oder anderem Nichtkraftstoffmaterial in den Verbrennungsraum zu erhöhen, wobei drei Arten von Wasserzugabe als vorteilhaft angesehen werden, nämlich:

1) unmittelbare Einspritzung von Wasser in den Verbrennungsraum (z.B. DE-A-34 32 787, DE-A-31 33 939 oder US-A-4 408 573;

2) Einleitung von Wasser, Wasserdampf oder Luft mit hohem Feuchtigkeitsgehalt in den dem Verbrennungsraum vorgeordneten Ansaugkanal (z. B. US-A-4 479 907, US-A-4 406 255, US-A-4 448 153, GB-A-2 093 121, GB-A-2 006 873 oder DE-A-26 02 287); und

3) Ausbildung einer Brennstoff-Wasser-Emulsion und Einleitung desselben in den Verbrennungsraum (z. B. DE-A-32 36 233 oder US-A-4 412 512).

Alle diese bekannten Systeme arbeiten in Abhängigkeit von einem oder mehreren Betriebsparametern, meist in Abhängigkeit von der Drehzahl der Brennkraftmaschine (zum Beispiel US-A-4 191 134) dem im Ansaugkanal herrschenden Unterdruck (zum Beispiel US-A-4 240 380), eines Klopfsensors (zum Beispiel US-A-4 406 255), des Abgasdruckes (zum Beispiel US-A-4 191 134) und/oder der im Ansaugkanal herrschenden Temperatur (EP-A-0 009 779). Alle diese Systeme haben eine mehr oder weniger hohe Wirkungsgrad-Verbesserung bei gleichzeitiger Reduzierung der Emission umweltbelastender Abgase, vor allem Reduzierung von CO und $NO_x$, zur Folge. Die Wirkungsgradverbesserung der bekannten Konstruktionen dürfte bei etwa 10 bis 15% liegen, was durchaus beachtlich ist.

Auch läßt sich der Brennstoff-Verbrauch um bis zu 50% reduzieren (US-A-4 479 907).

In der unter Ziff. 1) bereits zitierten DE-A-31 33 939 ist darüberhinaus vorgeschlagen, das Wasser in den Verbrennungsraum derart dosiert einzuspritzen, daß die maximale und mittlere Temperatur der Verbrennung auf einem gewählten Niveau unterhalb der unkontrollierten bzw. kritischen "Klopf"-Temperatur gehalten wird. Die Einspritzung des Wassers erfolgt dann, wenn die Brennstoff/Luft-Mischung gezündet worden ist, jedoch bevor die Verbrennung beendet ist und bevor die Temperatur und Drücke innerhalb der Verbrennungskammern ein Klopfen bewirken. Dadurch soll bei höherem Kompressionsverhältnis in der Größenordnung bis zu 18,7 : 1 ein Klopfen sicher vermieden werden.

Ausgehend von dem genannten, sehr vielfältigen Stand der Technik liegt der Erfindung die Aufgabe zugrunde, ein Verfahren und eine Anordnung der eingangs genannten Art zu schaffen, das bei noch weiter erhöhtem Wirkungsgrad und einer Brennstoff-Ersparnis bis zu etwa 60 bis 65% und erheblicher Schadstoffreduzierung eine äußerst weiche Verbrennung selbst bei niedrigsten Drehzahlen der Brennkraftmaschine erlaubt, und zwar insbesondere unter Verwendung von Niedrigoctan-Brennstoff, wie Normalbenzin, oder Brennstoff mit der Octanzahl "0", wie Acetylen oder dergleichen.

Diese Aufgabe wird verfahrensgemäß durch die kennzeichnenden Maßnahmen nach Patentanspruch 1, und vorrichtungsgemäß durch die kennzeichnenden Merkmale nach Patentanspruch 9 gelöst.

Der Kern der vorliegenden Erfindung liegt in der Zubereitung und Einleitung des Brennstoff/Wasser/Luft-Gemisches in einen Verbrennungsraum unter Verdichtung und Zündung desselben derart, daß sich eine "Initial- bzw. Primärverbrennung" des Brennstoff/Luft-Gemisches bei einer Temperatur knapp unterhalb der unkontrollierten bzw. kritischen (Klopf) Temperatur $T_c$ (Klopfgrenze) einstellt, die entsprechend sekundär eine fortschreitende Verdampfung des beigemengten Wassers unter Entstehung von ultraüberhitztem Dampf mit hohem Energiegehalt auslöst. Der "Primärzyklus" und "Sekundärzyklus" erfolgt an jeder Stelle der Verbrennung, das heißt an jeder Stelle der Flammenfront im Gegensatz zu der Lösung nach der DE-A-31 33 939. Im Gegensatz zu dem aus dieser Druckschrift bekannten System wird erfindungsgemäß eine "Primärverbrennung" nahe der unkontrollierten bzw. kritischen Temperatur im Verbrennungsraum angestrebt und angesteuert durch entsprechende Beimengung von Wasser. In der Regel wird angestrebt, die Verbrennung in einem möglichst großen Temperaturabstand von der kritischen Temperatur im Verbrennungsraum durchzuführen, um auf diese Weise sicher ein Klopfen der Brennkraftmaschine zu vermeiden. Aus diesem Grunde verwendet man bei hoch-verdichtenden Kraftfahrzeug-Verbrennungsmotoren auch hoch-octanhaltige Brennstoffe, obwohl diese nur in kritischen Lastbereichen erforderlich sind, im übrigen die Motoren auch mit Normalbenzin gefahren werden könnten. Durch die Verwendung von hoch-octanhaltigem Brennstoff (Superbenzin) erreicht man jedoch eine ausreichende Sicherheit gegen Klopfen bei nahezu jedem Betriebszustand. Erfindungsgemäß soll die Verbrennung jedoch bei sämtlichen Betriebszuständen jeweils knapp unterhalb der Klopfgrenze stattfinden, wobei die Spitzentemperatur im Verbrennungsraum durch gesteuerte Wasserbeimengung bei

2

jedem Betriebszustand knapp unterhalb der unkontrollierten bzw. kritischen Temperatur gehalten wird. Es wird also eine Temperatur im Verbrennungsraum angesteuert, die etwa 1 bis 5% unterhalb der kritischen Temperatur liegt. Diese ist abhängig vom verwendeten Brennstoff, ebenso wie das kritische Verdichtungsverhältnis oder der kritische Druck. Es hat sich gezeigt, daß die Brennkraftmaschine bei Anwendung des erfindungsgemäßen Systems (Verfahren und Anordnung) bei jedem Betriebszustand knapp unterhalb der Klopfgrenze gefahren werden kann, wobei "reale" Verdichtungsverhältnisse ρ (Brennstoff/Luft) von bis zu 25 : 1 erhalten werden.

Uberraschenderweise lassen sich nach dem erfindungsgemäßen Verfahren und unter Anwendung der erfindungsgemäßen Anordnung hochexplosive Gase, wie Acetylen, problemlos in einer Brennkraftmaschine verbrennen, wie weiter unten anhand eines noch näher zu erläuternden Ausführungsbeispieles mit einem 1200-cm³-Austin-Motor für Kraftfahrzeuge dargelegt werden wird.

Unter Anwendung des erfindungsgemäßen Verfahrens bzw. der erfindungsgemäßen Anordnung läßt sich der Wirkungsgrad um bis zu 70% gegenüber herkömmlichen Brennkraftmaschinen der genannten Art verbessern. Der Kraftstoffverbrauch kann um bis zu 65% reduziert werden. Auch ist die Emission von CO und $NO_x$ auf ein Minimum reduziert. Die Brennkraftmaschine eignet sich vor allem auch zur Verbrennung von bleifreiem Benzin. Es sei jedoch an dieser Stelle nochmals betont, daß die genannten Werte sich nur dann erreichen lassen, wenn die "Primärverbrennung" knapp unterhalb der Detonationstemperatur stattfindet. Der dadurch an jedem Verbrennungsort ausgelöste "Sekundärzyklus" setzt den "Primärzyklus" fort derart, daß insgesamt eine fortschreitende "weiche" Verbrennung erhalten wird. Der "Sekundärzyklus" dämpft gewissermaßen die knapp unterhalb der Klopfgrenze stattfindende "Initial- bzw. Primärverbrennung" unter gleichzeitiger Fortsetzung derselben, und zwar dadurch bedingt, daß der ultraüberhitzte Dampf die zuvor aufgenommene Energie sukzessive wieder abgibt. Zur Erzielung der erfindungsgemäß angestrebten "2-phasigen" Verbrennung ist es von großer Wichtigkeit, daß der Brennstoff, Luft oder ein anderes Oxidationsmittel und Wasser vor Einleitung in den Verbrennungsraum intensiv miteinander vermischt werden. Dann ist sichergestellt, daß an jedem Ort der Verbrennung diese in der angegebenen Weise stattfindet. Zu diesem Zweck wird im Ansaugkanal vorzugsweise vor bzw. stromaufwärts der üblicherweise vorhandenen Drosselklappe eine Art Mischkammer ausgebildet, die zum Beispiel begrenzt ist einerseits durch die Lufteintrittsöffnung und andererseits durch eine vor der Drosselklappe angeordnete Einschnürung (Venturi-Abschnitt) des Ansaugkanals. In dieser Mischkammer wird eine starke Verwirbelung von Brennstoff, Luft und Wasser angestrebt, um die gewünschte innige Vermischung dieser drei Komponenten zu erhalten.

Die Wasserzufuhr erfolgt erfindungsgemäß unter Einspritzung in die erwähnte Mischkammer abhängig von der im Verbrennungsraum herrschenden Temperatur, wobei — wie dargelegt — die Wassereinspritzung bei einer Temperatur von etwa 1 bis 5% unterhalb der kritischen Temperatur $T_C$ gestartet wird. Es wird angestrebt, daß die "Primärverbrennung" in allen Betriebszuständen jeweils knapp unterhalb der kritischen Temperatur stattfindet, und zwar möglichst etwa 1 bis 2% unterhalb der kritischen Temperatur. Entsprechend wird die Wassereinspritzung dosiert.

Zusätzlich kann eine durch Unterdruck im Ansaugkanal gesteuerte Wassereinleitung in die erwähnte Mischkammer vorgesehen sein, die durch die dargelegte Wassereinspritzung überlagert wird. Diese durch Unterdruck im Ansaugkanal bedingte Wassereinleitung genügt, daß in unkritischen Betriebsphasen die "Primärverbrennung" nahe an die kritische Temperatur $T_C$ herangeführt wird.

Erstaunlicherweise hat sich gezeigt, daß nach dem erfindungsgemäßen Verfahren auch hochexplosives Acetylen ($C_2H_2$) gefahrlos und unter extrem geringem Verbrauch verbrannt werden kann. Bei einem Versuch mit einem 1200-cm³-Austin-Motor sind folgende Verbrauchswerte festgehalten worden:

| | |
|---|---|
| Laufzeit: | 10 Minuten |
| Drehgeschwindigkeit: | 3000 U/min |
| Verbrauch $C_2H_2$: | 0,35 kg |
| Verbrauch $H_2O$: | 2,8 kg |

Das Verhältnis Wasser: Acetylen betrug bei diesem Versuch also 8 : 1. Die Schadstoffemission war ebenfalls bei diesem Versuch minimal. Im Verbrennungsraum wurde eine Temperatur von knapp unterhalb der kritischen Temperatur für die Primärverbrennung von Brennstoff (Acetylen) und Luft gehalten. Bei dem Versuch war die Förderleistung der Wasser-Förderpumpe während der Einspritzphase konstant. Es ist selbstverständlich denkbar, die Förderleistung der Wasser-Förderpumpe variabel zu gestalten in Abhängigkeit von der im Verbrennungsraum festgestellten Temperatur. Je näher sich die Temperatur im Verbrennungsraum der kritischen Temperatur nähert, desto größer müßte die Förderleistung der Wasser-Förderpumpe sein.

Ferner ist von nicht untergeordneter Bedeutung die externe Kühlung des Verbrennungsraumes. Zu diesem Zweck ist ein weiterer Temperatursensor (Thermoelement) an dem den Verbrennungsraum umgebenden Wassermantel vorgesehen, der mit der Steuereinheit für die Kühlwasserpumpe gekoppelt ist.

Das erfindungsgemäße Verfahren erlaubt die Durchführung der Verbrennung bei einem "realen" Verdichtungsverhältnis von bis zu 25 : 1, wobei das "reale" Verdichtungsverhältnis bestimmt ist durch das nur vom Brennstoff und Oxidationsmittel (Luft) eingenommene Volumen. Derartig hohe "reale" Verdichtungsverhältnisse sind bei herkömmlichen Brennkraftmaschinen nicht möglich.

## EP 0 204 707 B1

Das dem Brennstoff/Luft-Gemisch beigemengte Wasser kann zum Teil aus den Abgasen zurückgewonnen werden durch an sich bekannte Verdampfungs- und Kondensationsverfahren (siehe zum Beispiel DE-C-3 102 088 oder US-A-4 279 223).

Bei Anwendung des erfindungsgemäßen Systems müssen selbstverständlich die übrigen Maschinen-Parameter entsprechend angepaßt werden; insbesondere hat sich herausgestellt, daß der Zündzeitpunkt näher an den oberen Totpunkt herangerückt werden muß unter gleichzeitiger früherer Öffnung und wesentlich späterer Schließung des Einlaßventils vor dem oberen Totpunkt bzw. nach dem unteren Totpunkt. Die "Überschneidung" wird also vergrößert, um eine gute Füllung und Spülung des Verbrennungsraumes zu erhalten.

Neben den erwähnten Temperatursensoren können noch sogenannte Detonations- bzw. Klopfsensoren und/oder Drucksensoren zur Feststellung des Druckes im Verbrennungsraum zur Steuerung der Druckwasser-Einspritzung und/oder der externen Kühlmittelpumpe vorgesehen sein. Die Verwendung von Klopfsensoren ist jedoch an sich bekannt. Sie hat sich jedoch in der Praxis als zu ungenau und nicht zu verbrennungsspezifisch herausgestellt. Vor allem ist mittels Klopfsensoren eine Ansteuerung der Initialverbrennung an die Klopfgrenze nicht möglich, da bei Ansprechen der Klopfsensoren in der Regel die Klopfgrenze bereits erreicht bzw. überschritten ist.

Konstruktionsmäßig sei noch auf die Ausbildung der Wasserdüse bzw. -düsen hingewiesen, die durch ein Mundstück mit einer Vielzahl von feinen Bohrungen gebildet sind. Vorzugsweise sind die Bohrungen im Mundstück der Wasserdüsen in Strömungsrichtung und/oder zur Radialen des Mundstückes geneigt gerichtet, um den austretenden Wasserstrahlen unter gleichzeitiger Zerstäubung Turbulenzen und eine Wirbelströmung aufzuprägen, die zur innigen Vermischung mit Brennstoff und Luft beitragen. Der Brennstoffdüse und/oder Wasserdüse(n) können auch noch Turbulatoren zugeordnet sein in Form von Leitnasen oder dergleichen.

Bei Verwendung von Acetylen als Brennstoff ist mindestens noch ein weiterer Brennstoffeinlaß stromabwärts der Drosselklappe in den Ansaugkanal, insbesondere Ansaugkrümmer, mündend vorgesehen. Ferner ist dem Brennstoffeinlaß vorteilhafterweise noch ein Wärmetauscher und/oder Gasdruckregler vorgeschaltet. Der Wärmetauscher dient vornehmlich dazu, das im Ansaugkanal bzw. in der Mischkammer desselben expandierende Gasvorher zu erwärmen, um den bei der Expansion sich einstellenden Temperaturabfall kompensieren und eine Vereisung im Ansaugbereich zu vermeiden.

Bei Anwendung des erfindungsgemäßen Systems hat sich gezeigt, daß die Abgase eine relativ niedrige Temperatur haben, auf jeden Fall wesentlich niedriger als die Abgase herkömmlicher Brennkraftmaschinen. Aus diesem Grunde kann als weitere Steuergröße für die Wassereinspritzung die Abgastemperatur herangezogen werden durch entsprechende Anordnung eines Thermoelementes bzw. Temperatursensors.

Schließlich kann noch für besonders kritische Betriebsphasen vorgesehen sein, die Wassereinspritzung mit der Steuerung der Drosselklappe zu koppeln, das heißt, der temperaturabhängigen Steuerung der Wassereinspritzung eine zusätzliche manuelle Steuerung zu überlagern.

Nachstehend wird die Erfindung anhand eines Ausführungsbeispiels einer Brennkraftmaschine für die Verbrennung von Acetylen und die Verbrennung von Normalbenzin anhand der beigefügten Zeichnungen näher erläutert. Es zeigen:

Fig. 1 eine Brennkraftmaschine zum Verbrennen von Acetylen im schematischen Teilschnitt und in schematischer Teilansicht;

Fig. 2 die Brennkraftmaschine nach Fig. 1, jedoch zum Verbrennen von flüssigen Niedrigoctan-Brennstoff, wie Normalbenzin;

Fig. 3 eine Blockschaltung für die Steuerung der Wassereinspritzung in Abhängigkeit von Betriebsparametern;

Fig. 4a-c Leistungs-, Drehmoment- und Verbrauchsdiagramme eines erfindungsgemäß betriebenen Hubkolbenmotors;

Fig. 5 die Ausbildung und Zuordnung der Brennstoff- und Wasserdüse innerhalb der im Ansaugkanal vorgesehenen "Mischkammer" in schematischer Seitenansicht;

Fig. 6 Qualitativer Verlauf der thermischen und Druck-Parameter der explosiven Reaktionen als Funktion der Wasserbeimengung und des Kraftstoffes.

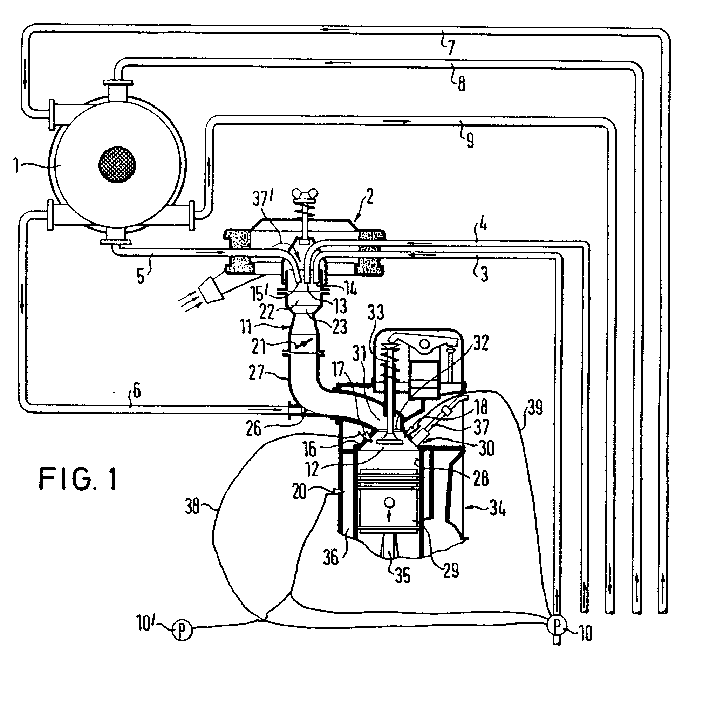

In Fig. 1 ist ein Hubkolbenmotor samt Ansaugstutzen im schematischen Teilschnitt dargestellt. Als Brennstoff dient Acetylen. Das Bezugszeichen 30 bezeichnet einen Zylinderkopf mit einer Einlaßleitung 31, einer Einlaßöffnung 32 und einem Einlaßventil 33. An die Einlaßleitung 31 ist ein einen Ansaugkrümmer 26 umfassender Ansaugkanal 11 angeschlossen, dessen freier Querschnitt durch eine Drosselklappe 21 variierbar ist. Das Bezugszeichen 28 bezeichnet den Zylinderraum innerhalb eines Motorblocks 34. Im Zylinderraum 28 ist ein Kolben 29 in herkömmlicher Weise aufund abbewegbar und über eine Pleuelstange 35 mit einer nicht dargestellten Kurbelwelle verbunden. Der Zylinderraum 28 ist von einem Kühlwassermantel 36 umgeben. Die Speisung des Kühlwassermantels 36 erfolgt durch eine Kühlwasserpumpe 10'. Das im Zylinderkopf noch angeordnete Auslaßventil ist in Fig. 1 nicht sichtbar, da hinter dem Einlaßventil 33 liegend. Zwischen Einlaß- und Auslaßventil ist im Zylinderkopf noch eine Zündkerze 37 angeordnet. Insofern handelt es sich um den herkömmlichen Aufbau eines Viertakt-Verbrennungsmotors.

Die Besonderheit des in Fig. 1 dargestellten Ausführungsbeispieles eines Verbrennungsmotors liegt

4

zum einen in der Verwendung von Acetylen als Brennstoff und zum anderen in der Beimengung von Wasser zum Brennstoff/Luft-Gemisch im Ansaugkanal 11 vor der Einleitung in den Verbrennungsraum 12. Der Verbrennungsraum 12 wird in herkömmlicher Weise durch die Zylinderkopfwandung einerseits und den Kolbenboden andererseits begrenzt. Vor bzw. stromaufwärts der Drosselklappe 21 ist im Ansaugkanal 11 eine Art Mischkammer 22 ausgebildet, die motorseitig durch eine Einschnürung bzw. einen Venturi-Abschnitt 23 begrenzt ist. In diese Mischkammer 22 münden eine Brennstoffdüse 15' sowie zwei Wasserdüsen 13 und 14. Am in Fig. 1 oberen bzw. dem Motor abgewandten Ende der Mischkammer 22 ist ein Luftfilter 2 aufgesetzt, durch den hindurch Verbrennungsluft 37 in die Mischkammer 22 strömen kann, und zwar an den Düsen 13, 14 und 15' vorbei. Die zu den Düsen 13, 14 und 15' führenden Wasserleitungen 3, 4 bzw. Brennstoffleitung 5 sind bei dem dargestellten Ausführungsbeispiel seitlich durch den Luftfilter 2 hindurchgeführt. Im übrigen handelt es sich um einen handelsüblichen Luftfilter für Verbrennungsmotoren.

In den Ansaugkrümmer 27 mündet noch eine weitere Brennstoffleitung 6 unter Ausbildung eines sich tangential erstreckenden Brennstoffeinlasses 26. Dadurch ist eine zusätzliche direkte Brennstoffzufuhr zur Einlaßleitung 31 möglich. Dies fördert die Initialzündung bzw. Primärverbrennung von Acetylen im Verbrennungsraum 12, die dann — wie oben dargelegt eine sanfte — Sekundärverbrennung des beigemengten Wassers auslöst, und zwar aufgrund der noch näher zu erläuternden innigen Vermischung von Brennstoff, Luft und Wasser im Bereich der Mischkammer 22 an jedem Ort der Primärverbrennung bzw. -zündung.

Die Zufuhr von Brennstoff, nämlich Acetylen, durch die beiden Brennstoffleitungen 5 und 6 erfolgt über einen Druckregler 1, der über eine Förderleitung 7 gespeist wird. Die Förderleistung 7 ist mit einem Acetylen-Reservoir verbunden. In diesem befindet sich das zu verbrennende Acetylen in flüssigem Zustand. Der Druckregler 1 umfaßt ferner einen Wärmetauscher, der mit dem Kühlmittelkreislauf in Verbindung steht. Über eine Heizwasserzuleitung 8 wird heißes Kühlwasser zum Wärmetauscher gefördert. Im Wärmetauscher wird dann Wärme an das zu verbrennende Acetylen abgegeben. Das dadurch abgekühlte Kühlwasser wird über eine Ableitung 9 wieder dem Kühlsystem zugeführt. Die Erwärmung des zunächst flüssigen Acetylens ist erforderlich, um den bei der Expansion und Verdampfung des Acetylens in der Mischkammer 22 entstehenden Temperaturabfall zu kompensieren und in diesem Bereich eine Vereisung zu vermeiden. Gleiches gilt für den Bereich des Brennstoffeinlasses 26.

Die Wasserleitungen 3 und 4 sind jeweils mit einem nicht dargestellten Wasserreservoir verbunden, wobei die Wasserleitung 3 eine Wasserpumpe 10 umfaßt, mit der Wasser unter Druck in die Mischkammer 22 eingespritzt werden kann. Die Wasserzufuhr über die Wasserleitung 4 und die dieser zugeordnete Wasserdüse 13 erfolgt allein in Abhängigkeit von dem im Ansaugkanal 11 bzw. in der Mischkammer 22 herrschenden Unterdruck, der durch die Drosselklappe 21 steuerbar ist. Die Wasserzufuhr durch die Düse 13 ist also lastabhängig. Die zusätzliche Wasserzufuhr über die Leitung 3 bzw. Wasserdüse 14 ist temperaturgesteuert derart, daß nach Überschreiten einer vorgegebenen Temperatur im Verbrennungsraum 12 knapp unterhalb der kritischen Temperatur $T_c$ (Klopftemperatur) die Pumpe 10 aktiviert wird. Die Pumpe 10 wird vorzugsweise bei einer Temperatur eingeschaltet, die etwa 1 bis 5% unterhalb der kritischen (Klopf-) Temperatur liegt. Zur Feststellung der Temperatur im Verbrennungsraum 12 sind diesem zwei Thermoelemente 17 und 18 zugeordnet, die über elektrische Leitungen 38, 39 mit der Steuereinheit der Pumpe 10 verbunden sind. Des weiteren ist dem Kühlwassermantel 36 ein Thermoelement 20 zugeordnet, dessen Signale ebenfalls mit der Steuereinheit der Pumpe 10 gekoppelt sein können. Vornehmlich dient das Thermoelement 20 jedoch zur Steuerung der externen Kühlwasserpumpe 10'. In Abhängigkeit von dem Thermoelement 20 wird das Kühlwasser durch die Kühlwasserpumpe 10' mehr oder weniger intensiv umgewälzt. Dadurch soll eine Überhitzung des Motors vermieden werden. Dies ist im vorliegenden Fall wichtig, da eine primärverbrennung knapp unterhalb der Klopfgrenze angestrebt und angesteuert wird. Die Förderleistung der Pumpe 10 kann variabel sein in Abhängigkeit von der von den Thermoelementen 17 und 18 festgestellten Temperatur im Verbrennungsraum Vorzugsweise ist das eine Thermoelement 17 nahe der Einlaßöffnung 32 angeordnet, während das zweite Thermoelement 18 sich zwischen Einlaßöffnung 32 und Zündkerze 37 befindet. Durch Vergleich der durch die derart positionierten Thermoelemente festgestellten Temperaturen kann die Temperatur der Primärverbrennung mit großer Genauigkeit ermittelt und über entsprechende Steuerung der Brennstoff- und Wassereinspritzung an die kritische (Klopf-) Temperatur $T_c$ herangeführt werden.

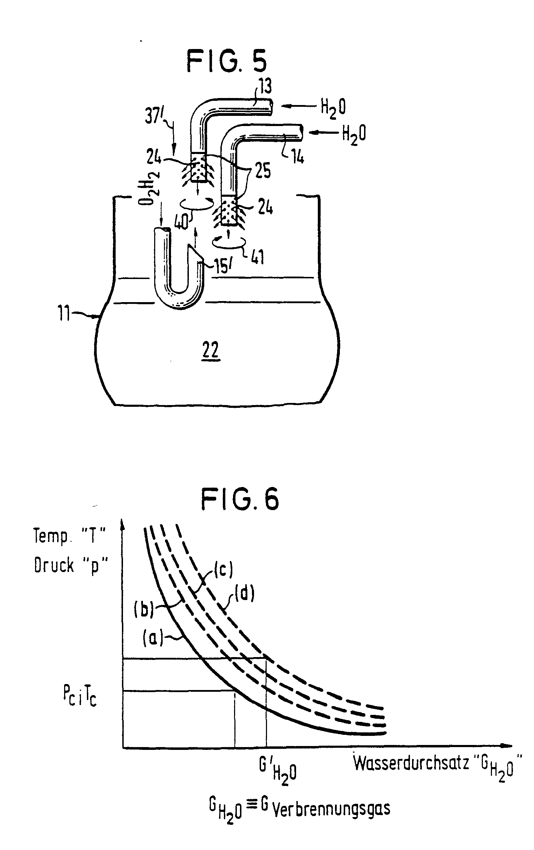

Wie oben ausgeführt worden ist, ist von großer Wichtigkeit für die angestrebte doppelzyklische Verbrennung eine innige Vermischung von Brennstoff, Wasser und Luft vor der Einleitung in den Verbrennungsraum 12. Zu diesem Zweck erfolgt die Einspritzung von Wasser und Brennstoff in der Mischkammer 22 im Gegenstrom; das heißt, die Wassereinspritzung und Brennstoffeinspritzung erfolgen entgegengesetzt gerichtet. Eine besonders gute Vermischung läßt sich dann erreichen, wenn die Brennstoffzufuhr sowohl der angesaugten Luft als auch im angesaugten und/oder eingespritzten Wasser entgegengerichtet ist. Es wird diesbezüglich insbesondere auf Fig. 5 verwiesen. Dort ist die Brennstoffdüse 15' nach oben gebogen, so daß der Brennstoff aus der Brennstoffdüse 15' in Richtung nach oben entgegen dem Lufteintritt 37 austritt. Ferner befindet sich der Brennstoffaustritt etwas unterhalb der nach unten gerichteten Wasserdüsen 13, 14. Aufgrund dieser Konstellation im Mischbereich 22 des Ansaugkanals 11 ergibt sich eine innige Vermischung von Brennstoff, Luft und Wasser. Zur Erhöhung der Vermischung wird das eingeleitete Wasser beim Austritt "vernebelt". Zu diesem Zweck umfassen die Wasserdüsen 13, 14 jeweils ein Mundstück 25 mit feinen Bohrungen 24, durch die das Wasser austreten kann. Die Bohrungen 24 sind vorzugsweise in Strömungsrichtung nach unten geneigt. Sie können zusätzlich gegenüber der Radialen geneigt gerichtet sein, so daß den austretenden Wassertröpfchen noch eine Rotationsbewegung um die Längsachsen der Wasserdüsen 13, 14 bzw. Mundstücke 25 aufgeprägt werden. Die aufgeprägten Rotationsbewegung der Wassertröpfchen kann gleich- oder entgegengesetzt gerichtet sein, wie zum Beispiel in Fig. 5 durch die Pfeile 40, 41 angedeutet.

Es können auch noch Maßnahmen vorgesehen sein, durch die der aus der Brennstoffdüse 15' austretende Brennstoff unter Ausbildung eines Brennstoffkegels aufgefächert wird. Auch dies trägt zu einer Feinverteilung und innigen Vermischung der erwähnten Komponenten bei.

Innerhalb der Mischkammer 22 können noch Turbulatoren vorgesehen sein in Form von in den Mischraum 22 ragende Nasen oder Leitbleche. Auf diese Weise verharren die zu vermischenden Komponenten quasi im Mischraum 22, bevor sie diesen durch den Venturi-Abschnitt 23 zur Einlaßleitung 31 verlassen.

Ein derart getriebener Motor läuft äußerst ruhig bzw. rund, und zwar herab bis zu einer Drehzahl von etwa 250 U/min. Die Schadstoffemission ist minimal. Die Abgastemperatur ist vergleichsweise niedrig. Das Verhältnis von Wasserzu Brennstoffverbrauch beträgt etwa 2 : 1 und mehr. Dies hängt unter anderem auch von den übrigen Konstruktionsdaten des verwendeten Motors ab.

Acetylen-gespeiste Brennkraftmaschinen eignen sich insbesondere für stationäre Zwecke (Notstromaggregate und Klein-Kraftwerke). Acetylen ist gut verfügbar, kann zum Beispiel aus Calciumcarbid freigesetzt werden. Auch ist die Verwendung von Acetylen als Brennstoff per se seit längerer Zeit bekannt, zum Beispiel bei der sogenannten Carbidlampe. Das Acetylen verbrennt dabei mit Luftsauerstoff zu Kohlenmon- bzw. -dioxid. Heutzutage wird Acetylen in erster Linie zur Polymerisation verwendet, wobei Polyvinylchlorid (PVC) entsteht. Bisher sind jedoch im Stand der Technik keine Vorrichtungen oder Verfahren vorgeschlagen worden, bei denen der große Energiegehalt des Acetylens zum Betreiben einer Brennkraftmaschine verwendet wird, und zwar vor allem zum klopffreien Betreiben einer derartigen Maschine. Im Stand der Technik fehlen konkrete Angaben für das funktionssichere Betreiben einer Brennkraftmaschine, insbesondere eines herkömmlichen Kraftfahrzeugmotors, mit Acetylen. Dabei besitzt Acetylen den Vorteil, daß die Ausgangsstoffe für die Herstellung fast überall ausreichend vorhanden sind, ohne daß man ausschließlich von einem bestimmten begrenzten geographischen oder politischen Gebiet abhängig ist.

So sind die Ausgangsstoffe Kalk, Kohle, Wasser und Salz in reichlichem Maße vorhanden. Der Kalk kann zum Beispiel aus dem Kalkstein in Kalksteinbrüchen oder Kalkgebirgen als ganz wesentlicher Bestandteil der Erdkruste, aus Kreide oder auch aus Meeren und Binnengewässern gewonnen werden. Auch Kohle und Koks ist für den genannten Zweck ausreichend vorhanden. Wasser und Salz stehen ebenfalls praktisch unbegrenzt zur Verfügung. Es bedarf für die Herstellung von Acetylen keiner besonderer Entwicklung mehr, da Acetylen bereits industriell in größeren Mengen für andere Zwecke hergestellt wird, zum Beispiel für Schweiß- und Schneidverfahren, oder wie dargelegt als wichtiger Grundstoff für Kunststoffe oder für künstlichen Kautschuk, und auch für die industrielle Herstellung von Dünge- und Schädlingsbekämpfungsmitteln. Ein weiterer Vorteil besteht darin, daß die Verbrennung von Acetylen unter Anwesenheit von Luft rußfrei erfolgt. Das erfindungsgemäße System stellt sich daher als äußerst umweltfreundlich dar. Überraschend ist, daß trotz der hohen Explosivität von Acetylen erfindungsgemäß die Explosionsgrenze angesteuert wird. Insofern beschreitet die Erfindung einen an sich abwegigen Weg, der sich jedoch aufgrund von Versuchen als äußerst funktionssicher herausgestellt hat und somit gefahrlos ist.

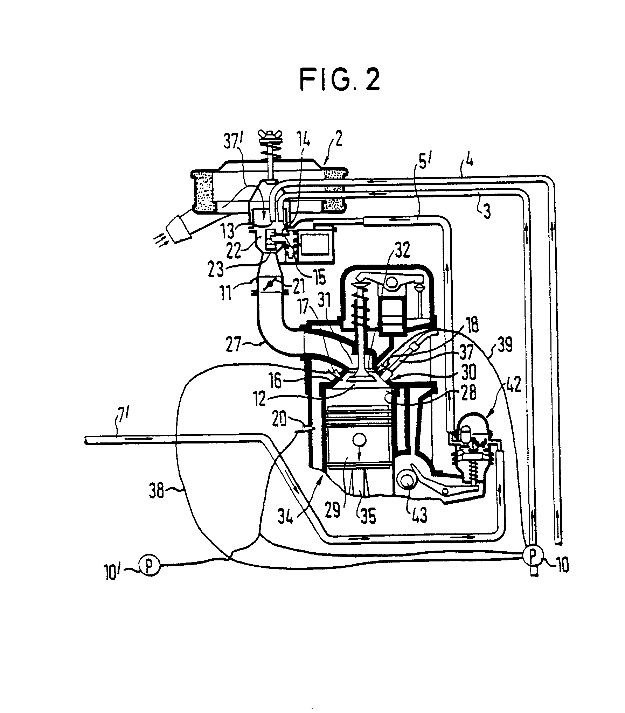

In Fig. 2 ist ein Benzin-gespeister Hubkolbenmotor in Kombination mit der erfindungsgemäßen Anordnung schematisch dargestellt. Mit Ausnahme der Kraftstoffeinleitung im Bereich der Mischkammer 22 ist die Ausführungsform nach Fig. 2 mit derjenigen nach Fig. 1 identisch. Dementsprechend sind gleiche Teile mit gleichen Bezugsziffern bezeichnet. Eine nähere Erörterung der bereits anhand der Fig. 1 beschriebenen Merkmale erübrigt sich.

Im Bereich der Mischkammer 22 erfolgt über eine nach oben, das heißt entgegen der angesaugten Luft 37 gerichtete Brennstoffdüse 15 die Einleitung von flüssigem Brennstoff, nämlich Niedrigoctan-Benzin, wie Normalbenzin, oder dergleichen. Die Brennstoffdüse 15 ist über eine Brennstoffleitung 5' mit einer Benzinpumpe 42 verbunden. Es handelt sich dabei um eine handelsübliche nockengesteuerte Membranpumpe (Nockenwelle 43). Die Verbindung zwischen einem nicht dargestellten Tank und der Benzinpumpe 42 erfolgt über eine Förderleitung 7'. Ähnlich wie bei dem Ausführungsbeispiel nach Fig. 1 liegt die Öffnung der Brennstoffdüse 15 unterhalb den Wasserdüsen 13, 14, um eine innige Vermischung von eingespritztem Benzin, Wasser und Luft zu erhalten.

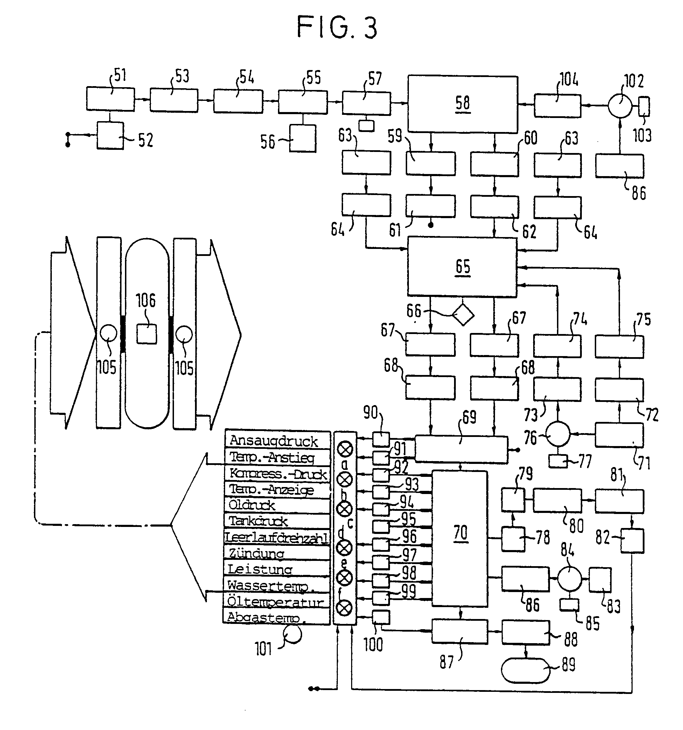

Anhand des Blockschemas nach Fig. 3 soll nunmehr das Gesamtsystem (Versuchstand) der Ausführungsform nach Fig. 1 als Übersicht dargestellt werden, wobei die Pfeile in Fig. 3 die Richtung des Informationsflusses bzw. die Verknüpfung zwischen den einzelnen Systemelementen anzeigen und die Bezugsziffern folgende Systemelemente bezeichnen:

51 Generator;
52 Manometer des Kraftstofftanks;
53 Einlaßhahn;
54 Sicherheitsventil;

6

EP 0 204 707 B1

55 Druckreduzierer für den Kraftstoff;

56 Manometer des Druckreduzierers;

57 Elektroventil für die Acetylenzuführung;

58 Reglergruppe;

59 Elektroventil für das Anlassen;

60 Regler für den Betriebsfluß;

61 Regler für den minimalen Direktfluß/Einspritzen);

62 Drosselvorrichtung für den Betriebsfluß;

63 Luftfilter;

64 Drosselvorrichtung für den Luftdurchsatz;

65 Mischkammer;

66 Sicherheitsvorrichtung;

67 kalibrierte Rohrleitungen für den Mischer-Vergaser;

68 Mehrfach-Einspritzdüsen;

69 Ansaugkrümmer;

70 Motor;

71 Kühlmitteltank;

72 Rohrleitung für die unterdruckgesteuerte Wasserzufuhr;

73 Rohrleitung für die temperaturgesteuerte Wasserzufuhr;

74 Einspritzer;

75 Einspritzer;

76 Einspritzpumpe;

77 Pumpenthermostat;

78 Schaltgetriebe und Doppelkupplung zur Bremse;

79 Einrichtungen des gesteuerten Speisesystems für die hydrodynamometrische Bremse;

80 hydrodynamometrische Bremse;

81 Hauptventil zur Niveauregelung der Turbine und System zur Lastsignalisierung;

82 Abschnitt zur Messung der abgegebenen Leistung;

83 Wassertank für die externe Motorkühlung;

84 Pumpe für die externe Wasserkühlung;

85 Pumpenthermostat;

86 Radiator;

87 Auslaßkrümmer und Abgas-(Auspuff-)rohr;

88 Rohrleitung zur Aufnahme und Ventil zur Ableitung von Abgasen zu einem Gaschromatographen;

89 Gaschromatograph;

90 Vakuummesser;

91 Thermometer für den Ansaugkrümmer;

92 Druckregler für den Kompressionstakt;

93 Öldruckregler;

94 Ölmanometer;

95 Unterdruckregler für die Zündvorverstellung;

96 Elektronischer Drehzahlmesser;

97 Detonations-(Klopf-)sensor;

98 Wasserthermometer;

99 Ölthermometer;

100 Thermometer am Auslaßkrümmer;

101 Schaltpult für die Steuerungen, Messungen und Signale;

102 Zirkulationspumpe für den (Wärme-) Tauscher der Reglergruppe;

103 Pumpenthermostat;

104 Rohrleitung zur Zuführung heißen Wassers zum Brennstoff-Wärmetauscher;

105 Schnittstellen;

106 Einheit zur automatischen Verbrennungssteuerung

a) Signalisierung des Druckreglers für den Kompressionstakt;

b) Signalisierung für den Öldruckregler;

c) Signalisierung für die Erregung des Elektroventils zur Acetylenzufuhr;

d) Signalisierung des Thermostaten für die temperaturgesteuerte Wasser-Einspritzung;

e) Signalisierung für das Einschalten der Kühlwasserpumpe (externe Motorkühlung);

f) Signalisierung für die Funktion der Zirkulationspumpe des Wärmetauschers der Druckreglergruppe.

Es sei an dieser Stelle nochmals darauf hingewiesen daß die Wassereinspritzung in die Mischkammer 22 möglichst in Abhängigkeit von der Temperatursteigerung bzw. dem Temperaturabfall im Verbrennungsraum 12 erfolgt. Es kann zusätzlich eine manuelle Wassereinspritzung vorgesehen sein für kritische Betriebsphasen (zum Beispiel in einem Kraftfahrzeug bei plötzlich ansteigender Last im niedrigsten Gang).

Nachstehend wird ein herkömmlicher Benzinmotor für Kraftfahrzeuge verglichen mit einem nach Fig. 1 modifizierten Motor für die Verbrennung von Acetylen:

7

# EP 0 204 707 B1

Typendaten des verwendeten Motors:

Marke:                 Innocenti

Modell:               3 AU/H

Takte:                 4

Zylinder:             4

Bohrung:            62,9 mm

Hub:                 76,2 mm

Hubraum:            948 cm$^3$

Kompressionsverhältnis:     8,3 : 1

maximale Leistung
(4800 U/min):          58,5 kW

maximales Drehmoment
(2200 U/min):          70 Nm

Zündung:            12 V-Batterie
                        Zündspule
                        Zündverteiler

Zündvorverstellung:       automatisch durch Fliehkraft

Ventilsteuerung:         hängende Ventile mit Kipphebelsteuerung

Einlaßventil öffnet 5° vor dem oberen Totpunkt (OT) und schließt 10° nach dem unteren Totpunkt (UT) Auslaßventil öffnet 40° vor dem UT und schließt 10° nach dem OT;

Brennstoff:            Benzin 98/100 N.O.R.M.
                        Förderung durch mechanische Membranpumpe

Wasserkühlung:          thermostatisches System

spezifischer Mindestverbrauch
bei voller Last:          320 g Benzin pro 1 kWh.

An dem genannten Motor wurden zur Verbrennung von Acetylen Änderungen vorgenommen, und zwar wie folgt:

Verringerung der Zündvorverstellung (Änderung der Fliehkraftvorverstellung) in eine nicht-lineare Unterdruckvorverstellung, wobei die statische Vorzündung konstant gehalten wurde;

Einstellung der Einlaß- und Auslaßventile wie folgt:

a) Einlaßventil öffnet 15° vor dem OT und schließt 55° nach dem UT;

b) Auslaßventil öffnet 40° vor dem UT und schließt 10° nach dem OT.

unterdruck-gesteuerte sowie temperatur-gesteuerte Wassereinspritzung im Ansaugkanal (siehe obige Ausführungen!)

zusätzliche temperatur-gesteuerte externe Wasserkühlung.

Bei den Untersuchungen hat sich herausgestellt, daß das Verhältnis Wasserverbrauch zu Acetylenverbrauch zwischen etwa 2 : 1 und bis zu 7: 1 liegt. Der Wirkungsgrad des Motors konnte um bis zu 70% gesteigert werden. Die Schadstoffemission war minimal. Die Abgase enthielten nur noch verschwindende Mengen CO. Das gleiche gilt für Stickoxide $NO_x$.

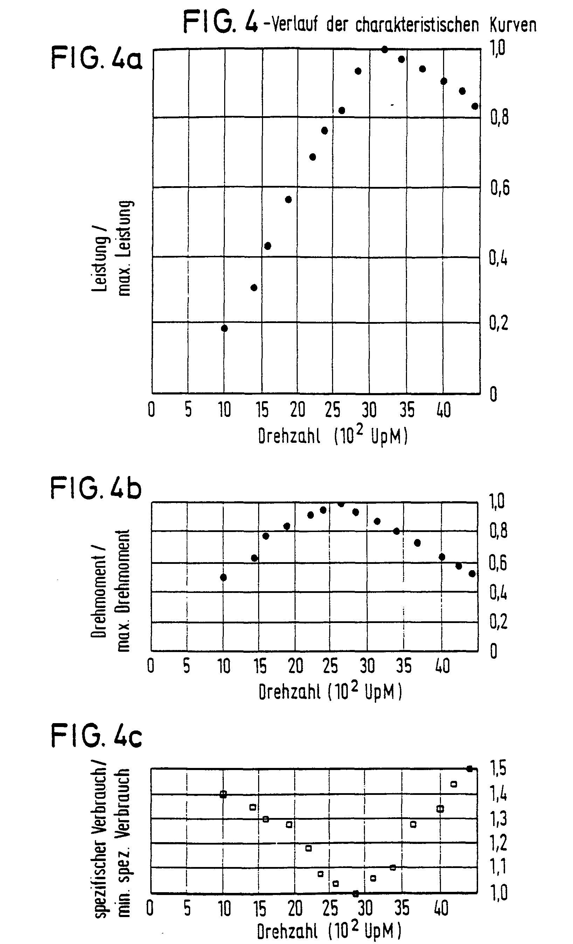

Ferner zeigte sich, daß der Verlauf der Betriebskurven (Leistung, Drehmoment und Verbrauch) demjenigen herkömmlicher Verbrennungsmotoren entsprach. Es wird diesbezüglich auf die Fig. 4a bis 4c verwiesen. Der Motor lief extrem ruhig bzw. rund, und zwar selbst bei Drehzahlen von nur etwa 250 U/min.

Untersuchungen mit Benzinspeisung haben gezeigt, daß im Schnitt das Verhältnis von Wasser zu Benzin (Normalbenzin) zu Luft wie folgt ist: 0,5 : 1 : 20.

Das in den Ansaugkanal eingeleitete Wasser besitzt Raumtemperatur; vorzugsweise wird es jedoch vorgewärmt auf etwa 65°C. Dies kann durch einen Wärmeaustausch mit dem Kühlwassersystem erfolgen

8

oder durch Beimengung von aus dem Abgas rückgewonnenes Wasser.

Die Figur 6 zeigt den qualitativen Verlauf der thermischen und Druckparameter der explosiven Reaktionen als Funktion des Durchsatzes ($G_{H2O}$) des dem Luft-Brennstoffgemisch beigemengten Wassers. Es ist möglich, für jede Art von Prüfbrennstoff eine Kurve zu zeichnen. (Kraftstoff a, b, c, d usw.) Das bedeutet, daß für den Brennstoff (a) mit bestimmten strukturellen Eigenschaften (Explosionsverhalten) bei einem Durchsatz $G_{H2O}$ des eingespritzten Wassers die kritischen Werte Tc und Pc erreicht werden. Dieser Durchsatz könnte sich für den Brennstoff (b) als unzureichend erweisen, falls die Planwerte Tc und Pc konstant sein sollen. Wenn hingegen bei Verwendung des mit (d) bezeichneten Brennstoffs neue Planwerte Pc und Tc erreicht werden sollen, wäre der erforderliche neue Durchsatz $G'_{H2O}$.

Daraus ergibt sich außerdem die Möglichkeit, vorbestimmte Planwerte Tc und Pc zu erreichen (die Funktionen des Explosivverhaltens des Prüfbrennstoffs sind), indem man von Fall zu Fall auf die Grundparameter des Motors einwirkt, die die Verbrennungsreaktion regeln und steuern.

Die Eingriffe auf die vorgenannten Motor-Grundparameter müssen umso drastischer sein, je geringer die "Explosiveigenschaften" des jeweiligen Prüfbrennstoffs sind. Dies ist notwendig, um immer und in jedem Fall an der Grenze der Explosivität liegende "Reinzbedingungen" zu schaffen, auch wenn der jeweilige Kraftstoff nur geringe Explosivkapazität hat.

Wenn man z.B. als Klassifikationsparameter die Fähigkeit eines Brennstoffs zu explosiven Reaktionen heranzieht (und vorerst das NITROGLYZERIN außer acht läßt), kann davon ausgegangen werden, daß Acetylen tatsächlich den ersten Platz belegen kann, während herkömmliches Benzin (98-100 N.O.) an die letzte Position käme. Es existieren daher nach Ansicht der Erfinder verschiedene "mittlere" Kraftstoffe, die sich als Prüfkraftstoffe bei der Realisierung des endothermen Dampfzyklus in den Motoren verwenden lassen.

Diese Ausführungen zeigen nochmals den überraschenden Effekt des beschriebenen Verfahrens bzw. der dazugehörigen Anordnung.

## Patentansprüche

1. Verfahren zum Betreiben einer Brennkraftmaschine, insbesondere eines Hub- oder Drehkolbenmotors, bei dem flüssiger oder gasförmiger Brennstoff bei Anwesenheit von Luft oder einem anderen Oxidationsmittel und unter Zugabe von Wasser in einem Verbrennungsraum verbrannt wird, wobei die Zugabe von Wasser in Abhängigkeit von der Verbrennungstemperatur gesteuert wird, derart, daß sie immer dann einsetzt, wenn die Verbrennungstemperatur auf einen Wert unterhalb der kritischen Klopf-Temperatur (Klopfgrenze) angestiegen ist, und derart, daß das Wasser während mindestens einer ausgewählten Phase, insbesondere mindestens des gesamten Verbrennungszyklus, in einer solchen Menge zugegeben wird, daß sich eine fortschreitende Verbrennung unterhalb der kritischen Klopf-Temperatur ergibt, dadurch gekennzeichnet, daß der Brennstoff, die Luft oder das andere Oxidationsmittel und das Wasser vor Einleitung dieser Komponenten in den Verbrennungsraum getrennt in eine im zum Verbrennungsraum führenden Ansaugkanal angeordnete Mischkammer eingeleitet und darin intensiv vermischt werden, daß die Verbrennungstemperatur mit mindestens einem Thermoelement ermittelt wird, das in den Verbrennungsraum ragt oder in einer der den Verbrennungsraum begrenzenden Wandung zum Verbrennungsraum hin gerichtet angeordnet ist, und daß die so ermittelte Verbrennungstemperatur einer Steuereinheit zugeführt wird, die eine zur Wasserzugabe dienende Pumpe in Abhängigkeit von dieser Temperatur immer dann einschaltet, wenn sie auf einen Wert ansteigt, der 1 - 5% niedriger ist als die kritische Klopf-Temperatur.

2. Verfahren nach Anspruch 1, dadurch gekennzeichnet, daß das Wasser zur intensiven Vermischung mit Brennstoff und Luft fein zerstäubt zugeführt wird.

3. Verfahren nach Anspruch 1 oder 2, dadurch gekennzeichnet, daß das Wasser im Ansaugbereich der Brennkraftmaschine im Gegenstrom zum eingeleiteten Brennstoff zugeführt wird unter Ausbildung eines homogenen Brennstoff/Luft/Wasser-Gemisches.

4. Verfahren nach einem der Ansprüche 1 bis 3, dadurch gekennzeichnet, daß die Verbrennung unter Verwendung von Niedrigoctan-Brennstoff, wie Normalbenzin oder dergleichen, durchgeführt wird.

5. Verfahren nach einem der Ansprüche 1 bis 3, dadurch gekennzeichnet, daß die Verbrennung unter Verwendung von Acetylen ($C_2H_2$) als Brennstoff durchgeführt wird.

6. Verfahren nach einem der Ansprüche 1 bis 5, dadurch gekennzeichnet, daß die Verbrennung bei einem "realen" Verdichtungsverhältnis von bis zu 25 : 1 durchgeführt wird.

7. Verfahren nach einem der Ansprüche 1 bis 6, dadurch gekennzeichnet, daß das dem Brennstoff/Luft-Gemisch beigemengte Wasser wenigstens zum Teil aus den Abgasen kondensiertes Wasser ist.

8. Verfahren nach einem der Ansprüche 1 bis 7, dadurch gekennzeichnet, daß bei Anwendung einer Fremdzündung der Zündzeitpunkt näher zum oberen Totpunkt (OT) hin verschoben wird unter gleichzeitig früherer Öffnung und wesentlich späterer Schließung des Einlaßventils vor dem oberen Totpunkt bzw. nach dem unteren Totpunkt (UT).

9. Brennkraftmaschine, insbesondere Hub- oder Drehkolbenmotor, die mit einem flüssigen oder gasförmigen Brennstoff bei Anwesenheit von Luft oder einem anderen Oxidationsmittel und unter Zugabe von Wasser betrieben wird, mit einem Verbrennungsraum (12), einem zum Verbrennungsraum führenden Ansaugkanal (11), einer dem Ansaugkanal dosiert Wasser zuführenden Dosiereinrichtung, die eine Wasser-Förderpumpe (10) und eine Wasserleitung (3, 4) umfaßt, einer im Ansaugkanal (11) ausgebildeten Mischkammer (22), in die Luft oder ein anderes Oxidationsmittel zugeführt wird und in die eine Brennstoffleitung (5) mündet und in der eine intensive Vermischung von Luft bzw. dem anderen Oxidationsmittel, Brennstoff und Wasser erfolgt, einer Steuereinheit (101), die mit mindestens einem im Bereich des Verbrennungsraums (12) angeordneten Temperaturfühler (17, 18) gekoppelt ist und die die Wasser-Förderpumpe (10) in Abhängigkeit von der mit dem Temperaturfühler (17, 18) ermittelten Verbrennungstemperatur steuert,

dadurch gekennzeichnet, daß die Wasserleitung (3, 4) in die Mischkammer (22) mündet, daß der Temperaturfühler (17, 18) als Thermoelement ausgebildet ist, das in den Verbrennungsraum (12) ragt oder in einer der den Verbrennungsraum (12) begrenzenden Wandung (16) zum Verbrennungsraum (12) hin gerichtet angeordnet ist, und daß die Steuereinheit (101) die Wasser-Förderpumpe dann einschaltet, wenn die ermittelte Verbrennungstemperatur auf einen Wert ansteigt, der 1 - 5% niedriger ist als die kritische Klopf-Temperatur (Klopfgrenze).

10. Anordnung nach Anspruch 9, dadurch gekennzeichnet, daß zusätzlich zur gesteuerten Wassereinleitung mittels der Wasser-Förderpumpe (10) eine vom Unterdruck im Ansaugkanal (11) abhängige Wassereinleitung über eine in den Ansaugkanal mündende Düse (13) vorgesehen ist.

11. Anordnung nach Anspruch 9 oder 10, dadurch gekennzeichnet, daß die Wasser-Förderpumpe (10) bzw. deren Steuereinheit mit einem weiteren Thermoelement (Sensor 20) gekoppelt ist, mittels dem die Temperatur des externen Kühlwassers in unmittelbarer Nähe des Verbrennungsraumes (12) feststellbar ist und durch das zusammen mit den dem Verbrennungsraum (12) unmittelbar zugeordneten Thermoelementen (17, 18) die die pumpe (10) steuernde Verbrennungstemperatur bestimmbar ist.

12. Anordnung nach einem der Ansprüche 9 bis 11, dadurch gekennzeichnet, daß die Mischkammer (22) im Ansaugkanal (12) vor bzw. stromaufwärts der dort üblicherweise vorgesehenen Drosselklappe (21) ausgebildet ist, und daß die Wasserleitung (3, 4) im Gegenstrom zum eingeleiteten Brennstoff sowie zur angesaugten Luft in die Mischkammer (22) mündet.

13. Anordnung nach Anspruch 12, dadurch gekennzeichnet, daß die Mischkammer (22) zwischen einem Luftfilter (2) und einem der Drosselklappe (21) vorgeordneten Venturi-Abschnitt (23) des Ansaugkanals (11) liegt.

14. Anordnung nach einem der Ansprüche 9 bis 13, dadurch gekennzeichnet, daß die am Ende der Wasserleitung (3, 4) vorgesehene Wasserdüse (13 und/oder 14) ein eine Vielzahl von feinen Bohrungen (24) aufweisendes Mundstück (25) umfaßt.

15. Anordnung nach Anspruch 14, dadurch gekennzeichnet, daß die Bohrungen (24) im Mundstück (25) in Strömungsrichtung und/oder zur jeweiligen Radialen des Mundstücks (25) geneigt gerichtet sind.

16. Anordnung nach Anspruch 14 oder 15, dadurch gekennzeichnet, daß der Brennstoffdüse (15, 15') und/oder Wasserdüse (13, 14) Turbulatoren zugeordnet sind, vorzugsweise in Form von in den Ansaugkanal (11) hineinragende Nasen, Gitter, Umlenkbleche oder dergleichen.

17. Anordnung nach einem der Ansprüche 9 bis 16, dadurch gekennzeichnet, daß bei Verwendung von brennbarem Gas, insbesondere Acetylen, als Brennstoff, mindestens ein weiterer Brennstoffeinlaß (26) stromabwärts der Drosselklappe (21) in den Ansaugkanal (Ansaugkrümmer 27) mündet.

18. Anordnung nach Anspruch 17, dadurch gekennzeichnet, daß dem Brennstoffeinlaß (15', 26) ein Wärmetauscher und/oder Gasdruckregler (1) vorgeschaltet ist bzw. sind.

19. Anordnung nach einem der Ansprüche 9 bis 18, dadurch gekennzeichnet, daß die Pumpe (10) zusätzlich durch einen Klopf- oder Detonationssensor steuerbar ist.

20. Anordnung nach einem der Ansprüche 9 bis 19, dadurch gekennzeichnet, daß die Wasser-Förderpumpe (10) zusätzlich durch einen die Temperatur der Abgase feststellenden Thermoelement (Temperatursensor) steuerbar ist.

21. Anordnung nach einem der Ansprüche 9 bis 20, dadurch gekennzeichnet, daß dem Verbrennungsraum (12) ein Drucksensor zugeordnet ist, durch den die Wasser-Förderpumpe (10) aktivierbar ist derart, daß sie bei Überschreiten eines vorgegebenen Druckes knapp unterhalb des kritischen "Klopf"-Druckes ($p_c$) im Verbrennungsraum (12) einschaltbar ist.

22. Anordnung nach einem der Ansprüche 12 bis 21, dadurch gekennzeichnet, daß in Abhängigkeit von der Steuerung der Drosselklappe (21) durch eine gesonderte Wasserdüse zusätzlich Wasser in den Ansaugkanal (11) vor bzw. stromaufwärts der Drosselklappe (21) einleitbar ist.

## Revendications

1. Procédé pour actionner un moteur à combustion interne, en particulier un moteur à pistons alternatifs ou rotatifs, dans lequel un carburant liquide ou gazeux est brûlé dans une chambre de combustion en présence d'air ou d'un autre oxydant et avec addition d'eau, l'addition d'eau étant commandée en fonction de la température de combustion de façon à intervenir à chaque fois que la température de combustion s'est accrue jusqu'à une valeur située au-dessous de la température critique de détonation (limite de détonation), et de telle sorte que l'eau est ajoutée pendant au moins une phase choisie, en particulier au moins la totalité du cycle de combustion, en une quantité telle qu'il en resulte une combustion progressive au-dessous de la température critique de détonation,

caractérisé en ce que le carburant, l'air ou l'autre oxydant et l'eau, avant introduction de ces constituants dans la chambre de combustion, sont introduits séparément dans une chambre de mélange disposée dans le canal d'aspiration conduisant à la chambre de combustion et y sont mélangés intimement, que la température de combustion est captée au moyen d'au moins un thermocouple, qui fait saillie dans la chambre de combustion ou est disposé dans une paroi limitant la chambre de combustion et orienté vers celle-ci, et que la température de combustion ainsi captée est envoyée à une unité de commande qui met en marche une pompe servant à l'addition d'eau en fonction de cette température à chaque fois que celle-ci croît jusqu'à une valeur inférieure de ·1 à 5% à la température critique de détonation.

2. Procédé selon la revendication 1, caractérisé en ce que l'eau, pour être mélangée intimement au carburant et à l'air, est amenée à l'état finement pulvérisé.

3. Procédé selon l'une des revendications 1 et 2, caractérisé en ce que l'eau est amenée dans la zone d'aspiration du moteur à combustion interne à contre-courant du carburant introduit avec formation d'un mélange homogène carburant/air/eau.

4. Procédé selon l'une des revendications 1 à 3, caractérisé en ce que la combustion est conduite en utilisant un carburant à faible indice d'octane tel que l'essence ordinaire ou analogue.

5. Procédé selon l'une des revendications 1 à 3, caractérisé en ce que la combustion est conduite en utilisant de l'acétylène ($C_2H_2$) comme carburant.

6. Procédé selon l'une des revendications 1 à 5, caractérisé en ce que la combustion est conduite avec un taux de compression "réel" pouvant atteindre 25:1.

7. Procédé selon l'une des revendications 1 à 6, caractérisé en ce que l'eau ajoutée au mélange carburant/air est au moins en partie de l'eau condensée à partir des gaz d'échappement.

8. Procédé selon l'une des revendications 1 à 7, caractérisé en ce que, lorsqu'on utilise un allumage commandé, le point d'allumage est décalé vers le point mort supérieur (OT), l'ouverture et la fermeture de la soupape d'admission étant en même temps avancées avant le point mort supérieur et sensiblement retardées après le point mort inférieur (UT) respectivement.

9. Moteur à combustion interne, en particulier moteur à pistons alternatifs ou rotatifs, actionné au moyen d'un carburant liquide ou gazeux en présence d'air ou d'un autre oxydant et avec addition d'eau, comprenant une chambre de combustion (12), un canal d'aspiration (11) conduisant à la chambre de combustion, un dispositif de dosage, qui comprend une pompe d'alimentation en eau (10) et une conduite d'eau (3, 4), amenant de l'eau de façon dosée au canal d'aspiration, une chambre de mélange (22) formée dans le canal d'aspiration (11), dans laquelle de l'air ou un autre oxydant est amené et dans laquelle débouche une conduite de carburant (5) et dans laquelle se produit un mélange intime de l'air ou de l'autre oxydant, du carburant et de l'eau, une unité de commande (101), couplée à au moins un capteur de température (17, 18) disposé dans la région de la chambre de combustion (12) et qui commande la pompe d'alimentation en eau (10) en fonction de la température de combustion captée par le capteur de température (17, 18),

caractérisé en ce que la conduite d'eau (3, 4) débouche dans la chambre de mélange (22), que le capteur de température (17, 18) est réalisé sous forme d'un thermocouple, qui fait saillie dans la chambre de combustion (12) ou est disposé dans une paroi (16) limitant la chambre de combustion (12) et orienté vers la chambre de combustion (12), et que l'unité de commande (101) met en marche la pompe d'alimentation en eau quand la température de combustion captée croît jusqu'à une valeur inférieure de 1 à 5% à la température critique de détonation (limite de détonation).

10. Disposition selon la revendication 9, caractérisée en ce que, en plus de l'introduction d'eau commandée au moyen de la pompe d'alimentation en eau (10), il est prévu une introduction d'eau dépendant de la dépression dans le canal d'aspiration (11), par l'intermédiaire d'un ajutage (13) débouchant dans le canal d'aspiration.

11. Disposition selon l'une des revendications 9 et 10, caractérisée en ce que la pompe d'alimentation en eau (10) ou son unité de commande est couplée à un thermocouple supplémentaire (capteur 20), au moyen duquel peut être déterminée la température de l'eau de refroidissement externe à proximité immédiate de la chambre de combustion (12) et par lequel, conjointement aux thermocouples (17, 18) associés directement à la chambre de combustion (12), peut être déterminée la température de combustion commandant la pompe (10).

12. Disposition selon l'une des revendications 9 à 11, caractérisée en ce que la chambre de mélange (22) est formée dans le canal d'aspiration (12) avant le ou en amont du papillon (21) qui y est prévu de façon habituelle, et que la conduite d'eau (3, 4) débouche dans la chambre de mélange à contre-courant du carburant introduit ainsi que de l'air aspiré.

13. Disposition selon la revendication 12, caractérisée en ce que la chambre de mélange (22) est située entre un filtre à air (2) et une section Venturi (23) du canal d'aspiration (11) précédant le papillon (21).

14. Disposition selon l'une des revendications 9 à 13, caractérisée en ce que l'ajutage d'eau (13 et/ou 14) prévu à l'extrémité de la conduite d'eau (3, 4) comporte une embouchure (25) présentant une multiplicité de fines perforations (24).

15. Disposition selon la revendication 14, caractérisée en ce que les perforations (24) de l'embouchure (25) sont orientées de façon inclinée dans le sens de l'écoulement et/ou par rapport à la radiale correspondante de l'embouchure (25).

16. Disposition selon l'une des revendications 14 et 15, caractérisée en ce qu'à l'ajutage du carburant (15, 15') et/ou à l'ajutage d'eau (13, 14) sont associés des générateurs de turbulences, de préférence sous forme de dents, grilles, chicanes ou analogues faisant saillie dans le canal d'aspiration (11).

17. Disposition selon l'une des revendications 9 à 16, caractérisée en ce que, lorsqu'on utilise comme carburant un gaz combustible, en particulier l'acétylène, au moins une entrée de carburant supplémentaire (26) débouche dans le canal d'aspiration (collecteur d'admission 27) en aval du papillon (21).

18. Disposition selon la revendication 17, caractérisée en ce qu'un échangeur de chaleur et/ou un régulateur de pression de gaz (1) est(sont) placé(s) en amont de l'entrée de carburant (15', 26).

19. Disposition selon l'une des revendications 9 à 18, caractérisée en ce que la pompe (10) peut en outre être commandée par un détecteur de détonation.

20. Disposition selon l'une des revendications 9 à 19, caractérisée en ce que la pompe d'alimentation en eau (10) peut en outre être commandée par un thermocouple (capteur de température) déterminant la température des gaz d'échappement.

21. Disposition selon l'une des revendications 9 à 20, caractérisée en ce qu'à la chambre de combustion (12) est associé un capteur de pression par lequel la pompe d'alimentation en eau (10) peut être activée de façon à se mettre en route lors du dépassement d'une pression prédéterminée à peine inférieure à la pression critique de "détonation" ($p_c$) dans la chambre de combustion (12).

22. Disposition selon l'une des revendications 12 à 21, caractérisée en ce que, en fonction de la commande du papillon (21), de l'eau peut être introduite additionnellement par un ajutage séparé dans le canal d'aspiration (11), avant le ou en amont du papillon (21).

## Claims

1. Process for operating an internal-combustion engine, in particular a reciprocating or rotary engine, in which liquid or gaseous fuel is burned in the presence of air or another oxidating agent and with the addition of water in a combustion chamber, the addition of water being controlled in dependence on the combustion temperature in such a way that it always commences whenever the combustion temperature has risen to a value below the critical knocking temperature (knocking limit) and in such a way that the water is added during at least one selected phase, in particular at least the entire combustion cycle, in such a quantity that a continuing combustion below the critical knocking temperature is obtained, characterized in that the fuel, the air or the other oxidating agent and the water are introduced into a mixing chamber, arranged in the intake port leading to the combustion chamber, and intensively mixed therein before introduction of these components into the combustion chamber, in that the combustion temperature is determined by at least one thermocouple, which protrudes into the combustion chamber or is arranged pointing towards the combustion chamber in one of the walls bounding the combustion chamber, and in that the combustion temperature thus determined is fed to a control unit which, in dependence on this temperature, always switches on a pump for adding water whenever it rises to a value which is 1 - 5% lower than the critical knocking temperature.

2. Process according to Claim 1, characterized in that the water is fed finally atomized, for intensive mixing with fuel and air.

3. Process according to Claim 1 or 2, characterized in that the water in the intake area of the internal-combustion engine is fed in countercurrent to the fuel introduced, forming a homogeneous fuel/air/water mixture.

4. Process according to one of Claims 1 to 3, characterized in that the combustion is carried out using low-octane fuel, such as regular-grade petrol or the like.

5. Process according to one of Claims 1 to 3, characterized in that the combustion is carried out using acetylene ($C_2H_2$) as fuel.

6. Process according to one of Claims 1 to 5, characterized in that the combustion is carried out at a "actual" compression ratio of up to 25 : 1.

7. Process according to one of Claims 1 to 6, characterized in that the water admixed to the fuel/air mixture is, at least in part, water condensed from the exhaust gases.

8. Process according to one of Claims 1 to 7, characterized in that, if an applied ignition is used, the ignition point is shifted closer towards the upper dead centre (OT), with at the same time earlier opening and substantially later closing of the inlet valve before the upper dead centre and after the lower dead centre (UT), respectively.

9. Internal-combustion engine, in particular reciprocating or rotary engine, which is operated with a liquid or gaseous fuel in the presence of air or another oxidating agent and with the addition of water, having a combustion chamber (12), an intake port (11), leading to the combustion chamber, a metering device, which feeds water in a metered manner to the intake port and comprises a water feed pump (10) and a water line (3, 4), a mixing chamber (22), which is formed in the intake port (11), has air or another oxidating agent fed into it and opens out into a fuel line (5) and in which an intensive mixing of air or the other oxidating agent, fuel and water takes place, a control unit (101), which is coupled to at least one temperature sensor (17, 18), arranged in the area of the combustion chamber (12), and controls the water feed pump (10) in dependence on the combustion temperature determined by the temperature sensor (17, 18), characterized in that the water line (3, 4) opens out into the mixing chamber (22), in that the temperature sensor (17, 18) is designed as a thermocouple which protrudes into the combustion chamber (12) or is arranged pointing towards the combustion chamber (12) in one of the walls (16) bounding the combustion chamber (12), and in that the control unit (101) switches on the water feed pump whenever the combustion temperature determined rises to a value which is 1 - 5% lower than the critical knocking temperature (knocking limit).

10. Arrangement according to Claim 9, characterized in that, in addition to the controlled introduction of water by means of the water feed pump (10), an introduction of water dependent on the negative pressure in the intake port (11), via a nozzle (13) opening out into the intake port, is provided.

11. Arrangement according to Claim 9 or 10, characterized in that the water feed pump (10) or its control unit is coupled to a further thermocouple (sensor 20), by means of which the temperature of the external cooling water in the direct vicinity of the combustion chamber (12) can be established and by which, together with the thermocouples (17, 18) directly assigned to the combustion chamber (12), the combustion temperature controlling the pump (10) can be determined.

12. Arrangement according to one of Claims 9 to 11, characterized in that the mixing chamber (22) is formed in the intake port (12) before or upstream of the throttle valve (21) usually provided there, and in that the water line (3, 4) opens out into the mixing chamber (22) in countercurrent to the fuel introduced and to the air taken in.

13. Arrangement according to Claim 12, characterized in that the mixing chamber (22) lies between an air filter (2) and a venturi section (23) of the intake port (11), arranged before the throttle valve (21).

14. Arrangement according to one of Claims 9 to 13, characterized in that the water nozzle (13 and/or 14) provided at the end of the water line (3, 4) comprises a mouthpiece (25) having a multiplicity of fine bores (24).

15. Arrangement according to Claim 14, characterized in that the bores (24) in the mouthpiece (25) are directed in the direction of flow and/or are inclined in relation to the respective radial of the mouthpiece (25).

16. Arrangement according to Claim 14 or 15, characterized in that the fuel nozzle (15, 15') and/or water nozzle (13, 14) are assigned turbulators, preferably in the form of lugs, grids, baffles or the like projecting into the intake port (11).

17. Arrangement according to one of Claims 9 to 16, characterized in that, if combustible gas, in particular acetylene, is used as fuel, at least one further fuel inlet (26) opens out into the intake port (intake manifold 27) downstream of the throttle valve (21).

18. Arrangement according to Claim 17, characterized in that a heat exchanger and/or gas pressure controller (1) is or are connected upstream of the fuel inlet (15', 26).

19. Arrangement according to one of Claims 9 to 18, characterized in that the pump (10) can be additionally controlled by a knocking or detonation sensor.

20. Arrangement according to one of Claims 9 to 19, characterized in that the water feed pump (10) can be additionally controlled by a thermocouple (temperature sensor) establishing the temperature of the exhaust gases.

21. Arrangement according to one of Claims 9 to 20, characterized in that the combustion chamber (12) is assigned a pressure sensor, by which the water feed pump (10) can be activated in such a way that it can be switched on if a predetermined pressure just below the critical "knocking" pressure ($p_c$) in the combustion chamber (12) is exceeded.

22. Arrangement according to one of Claims 12 to 21, characterized in that water can be additionally introduced into the intake port (11) before or upstream of the throttle valve (21) through a separate water nozzle in dependence on the control of the throttle valve (21).

FIG. 1

# FIG. 2

# FIG. 3

Ansaugdruck
Temp.-Anstieg
Kompress.-Druck
Temp.-Anzeige
Öldruck
Tankdruck
Leerlaufdrehzahl
Zündung
Leistung
Wassertemp.
Öltemperatur
Abgastemp.

FIG. 4 -Verlauf der charakteristischen Kurven

FIG. 4a

Leistung / max. Leistung

Drehzahl ($10^2$ UpM)

FIG. 4b

Drehmoment / max. Drehmoment

Drehzahl ($10^2$ UpM)

FIG. 4c

spezifischer Verbrauch/ min. spez. Verbrauch

Drehzahl ($10^2$ UpM)

# FIG. 5

# FIG. 6

$$G_{H_2O} \equiv G \text{ Verbrennungsgas}$$